# EUROPEAN PATENT APPLICATION

(11) **EP 4 838 985 A1**
(43) Date of publication of application: **11.11.2026**
(21) Application number: 25741353.4
(22) Date of filing: 03.01.2025
(51) Int. Cl.: H04W 72/20

(54) **COMMUNICATION METHODS, COMMUNICATION APPARATUS AND COMMUNICATION SYSTEM**

(30) Priority: 17.01.2024 CN 202410071590
(71) Applicant: Huawei Technologies Co., Ltd., Shenzhen, Guangdong 518129 (CN)
(72) Inventor: WANG, Chunsheng, Shenzhen, Guangdong 518129 (CN); ZHANG, Gejian, Shenzhen, Guangdong 518129 (CN)
(74) Representative: Huawei European IPR
(86) International application number: PCT/CN2025/070339
(87) International publication number: WO 2025/152790

(57) **Abstract**

A communication method, a communication apparatus, and a communication system are provided, relating to the field of communication technologies. In the method, a radio frequency unit and a first distributed unit exchange first information and second information. The first information requests a first resource. The first resource belongs to a resource set. Resources in the resource set are used to serve at least two distributed units. The second information is used to respond to the first information. The second information is determined based on the first resource and resource allocation of the resource set. The radio frequency unit can flexibly configure resources of the radio frequency unit based on information exchange about a resource configuration of the radio frequency unit and the first distributed unit. For example, when a remaining resource exists in a resource set of the radio frequency unit, the first distributed unit may request the radio frequency unit to configure the remaining resource, and the radio frequency unit may determine, based on the request of the first distributed unit, whether to configure the remaining resource. In this way, utilization of the resources of the radio frequency unit can be effectively improved.

## Description

This application claims priority to Chinese Patent Application No. 202410071590.0, filed with the China National Intellectual Property Administration on January 17, 2024 and entitled "COMMUNICATION METHOD, COMMUNICATION APPARATUS, AND COMMUNICATION SYSTEM", which is incorporated herein by reference in its entirety.

### TECHNICAL FIELD

This application relates to the field of communication technologies, and more specifically, to a communication method, a communication apparatus, and a communication system.

### BACKGROUND

In some scenarios, a communication system may include at least one radio frequency unit (radio unit, RU) and a plurality of distributed units (distributed units, DUs). An example in which one RU is shared by the plurality of DUs is used. Resources of the RU may be allocated to the plurality of DUs, or in other words, the plurality of DUs can share the resources of the RU. However, how to improve utilization of the resources of the RU is a technical problem to be urgently resolved currently.

### SUMMARY

This application provides a communication method, a communication apparatus, and a communication system, to support improvement of utilization of resources of an RU.

According to a first aspect, a communication method is provided. The communication method includes: receiving first information from a first distributed unit, where the first information requests a first resource; and sending second information to the first distributed unit in response to the first information, where the second information is determined based on resource allocation in a resource set of the radio frequency unit and the first resource, the resource set is usable by the radio frequency unit to serve at least two distributed units, and the at least two distributed units include the first distributed unit.

The solution in the first aspect may be performed by the radio frequency unit, or may be a module (such as a chip system) in the radio frequency unit, or may be a logical node, a logical module, or software that can implement all or some functions of the radio frequency unit. This is not limited herein. For ease of description, the following uses the radio frequency unit as an example for description.

The radio frequency unit and the first distributed unit may exchange the first information and the second information. The radio frequency unit can flexibly configure the resource of the radio frequency unit based on information exchange about a resource configuration of the radio frequency unit and the first distributed unit, so that the resource of the radio frequency unit can be fully configured. For example, when a remaining resource exists in a resource set of the radio frequency unit, the first distributed unit may request the radio frequency unit to configure some or all resources in the remaining resource, and the radio frequency unit may determine, based on a request of the first distributed unit, whether the remaining resource of the radio frequency unit can be configured. In this way, utilization of the resources of the radio frequency unit can be effectively improved.

Compared with a solution in which the resources of the radio frequency unit are configured in a static configuration manner (for example, the radio frequency unit pre-configures resources for the distributed unit, without considering whether there is a remaining resource in the resources of the radio frequency unit, and without considering whether the distributed unit has an actual requirement for using the resources), a solution in which the distributed unit requests resources to be configured from the radio frequency unit can support the effective configuration of the resources of the radio frequency unit in this embodiment of this application.

For example, it may be avoided that the radio frequency unit cannot use the remaining resource in the resource set. For another example, when the distributed unit does not have an actual requirement for using pre-configured resources, the resources are in an invalid utilization state. When the distributed unit may request the radio frequency unit to configure a resource based on a requirement of the distributed unit, resource utilization may be effectively improved.

Based on the above, embodiments of this application can support the effective configuration of the resources of the radio frequency unit, thereby improving utilization of the resources of the radio frequency unit.

In the first aspect, the method further includes sending third information to the second distributed unit, where the third information indicates that the allocated additional resource in the resource set that corresponds to the second distributed unit has changed.

In this way, the second distributed unit may determine, based on the third information, that a resource quantity of the additional resource that has been successfully requested changes, and may adjust, in a timely manner, a manner of using the additional resource. For example, the second distributed unit may provide a proper service for a user based on the adjusted additional resource.

In the first aspect, the method further includes sending fourth information, where the fourth information indicates the resource allocation in the resource set.

The radio frequency unit may send the fourth information to the first distributed unit and/or the second distributed unit, and the first distributed unit and/or the second distributed unit may determine, based on the resource allocation in the resource set indicated by the fourth information, whether to continue to apply to the radio frequency unit for a resource to be configured. In this way, utilization of the resources of the radio frequency unit may be further improved.

According to a second aspect, a communication method is provided. The communication method includes: sending first information to a radio frequency unit, where the first information requests a first resource; and receiving second information from the radio frequency unit, where the second information is determined based on resource allocation in a resource set of the radio frequency unit and the first resource, the resource set is usable by the radio frequency unit to serve at least two distributed units, the at least two distributed units include the first distributed unit, and the second information is a response to the first information.

The solution in the second aspect may be performed by the first distributed unit, or may be a module (such as a chip system) in the first distributed unit, or may be a logical node, a logical module, or software that can implement all or some functions of the first distributed unit. This is not limited herein. For ease of description, the following uses the first distributed unit as an example for description.

The radio frequency unit and the first distributed unit may exchange the first information and the second information. The radio frequency unit can flexibly configure the resource of the radio frequency unit based on information exchange about a resource configuration of the radio frequency unit and the first distributed unit, so that the resource of the radio frequency unit can be fully configured. For example, when a remaining resource exists in a resource set of the radio frequency unit, the first distributed unit may request the radio frequency unit to configure some or all resources in the remaining resource, and the radio frequency unit may determine, based on a request of the first distributed unit, whether the remaining resource of the radio frequency unit can be configured. In this way, utilization of the resources of the radio frequency unit can be effectively improved.

Compared with a solution in which the resources of the radio frequency unit are configured in a static configuration manner (for example, the radio frequency unit pre-configures resources for the distributed unit, without considering whether there is a remaining resource in the resources of the radio frequency unit, and without considering whether the distributed unit has an actual requirement for using the resources), a solution in which the distributed unit requests resources to be configured from the radio frequency unit can support the effective configuration of the resources of the radio frequency unit in this embodiment of this application.

For example, it may be avoided that the radio frequency unit cannot use the remaining resource in the resource set. For another example, when the distributed unit does not have an actual requirement for using pre-configured resources, the resources are in an invalid utilization state. When the distributed unit may request the radio frequency unit to configure a resource based on a requirement of the distributed unit, resource utilization may be effectively improved.

Based on the above, embodiments of this application can support the effective configuration of the resources of the radio frequency unit, thereby improving utilization of the resources of the radio frequency unit.

In the second aspect, the method further includes receiving fourth information from the radio frequency unit, where the fourth information indicates the resource allocation in the resource set.

The first distributed unit may determine, based on the resource allocation in the resource set indicated by the fourth information, whether to continue to apply to the radio frequency unit for a resource to be configured. In this way, utilization of the resources of the radio frequency unit can be further improved.

With reference to the solution in any one of the first aspect and the second aspect, the first information indicates that an attribute of the first resource is a basic resource or an additional resource, the basic resource is a resource used to provide a service within coverage of a cell, and the additional resource is a resource used to improve user experience.

By distinguishing between the basic resource and the additional resource, the radio frequency unit may meet resource requirements of different distributed units. For example, the radio frequency unit may meet a requirement of some distributed units for providing basic communication. For another example, the radio frequency unit may meet a requirement of some distributed units for improving user services.

By indicating the attribute of the first resource, the radio frequency unit may determine, based on the attribute of the first resource, whether the first resource needs to be configured. For example, a configuration priority of the basic resource is higher than a configuration priority of the additional resource. When the attribute of the first resource is the basic resource, the radio frequency unit preferentially ensures that the basic resource is configured. For another example, when the attribute of the first resource is the additional resource, the radio frequency unit does not preferentially ensure that the additional resource is configured. In this way, the radio frequency unit can ensure that a resource configuration success probability of the distributed unit that applies for the basic resource is higher than a resource configuration success probability of the distributed unit that applies for the additional resource.

With reference to the solution in any one of the first aspect and the second aspect, the second information being determined based on the resource allocation in the resource set of the radio frequency unit and the first resource includes: the second information is determined based on the attribute of the first resource, the first resource, and the resource allocation in the resource set.

In this way, the radio frequency unit may determine, based on the attribute of the first resource, the first resource, and the resource allocation in the resource set, whether the first resource can be configured, thereby supporting improvement of utilization of the resources of the radio frequency unit.

With reference to the solution in any one of the first aspect and the second aspect, the second information being determined based on the attribute of the first resource, the first resource, and the resource allocation in the resource set includes: the second information is determined based on the attribute of the first resource, the first resource, and an unallocated resource in the resource set.

When the radio frequency unit determines, based on a situation of the unallocated resource in the resource set, whether to configure the first resource, the configuration of the allocated resources in the resource set of the radio frequency unit is not changed.

With reference to the solution in any one of the first aspect and the second aspect, the second information being determined based on the attribute of the first resource, the first resource, and the resource allocation in the resource set includes: the second information is determined based on the attribute of the first resource, the first resource, the unallocated resource in the resource set, and an allocated additional resource in the resource set.

When the radio frequency unit determines, based on the unallocated resource in the resource set and the allocated additional resource in the resource set, whether to configure the first resource, the radio frequency unit may reclaim some or all of the additional resources from the allocated additional resources, so as to preferentially ensure the configuration of the basic resource.

With reference to the solution in any one of the first aspect and the second aspect, the first information indicates that the attribute of the first resource is a basic resource, the first resource is less than or equal to the unallocated resource in the resource set, and the second information is used to configure the first resource.

When the first resource is less than or equal to the unallocated resource in the resource set, the radio frequency unit may support the configuration of the first resource.

With reference to the solution in any one of the first aspect and the second aspect, the first information indicates that the attribute of the first resource is a basic resource, the first resource is greater than the unallocated resource in the resource set, and the second information indicates a request failure.

When the first resource is greater than the unallocated resource in the resource set, the radio frequency unit does not support the configuration of the first resource.

With reference to the solution in any one of the first aspect and the second aspect, the first information indicates that the attribute of the first resource is the additional resource, the first resource is less than or equal to the unallocated resource in the resource set, and the second information is used to configure the first resource.

When the first resource is less than or equal to the unallocated resource in the resource set, the radio frequency unit may support the configuration of the first resource.

With reference to the solution in any one of the first aspect and the second aspect, the first information indicates that the attribute of the first resource is the additional resource, the first resource is greater than the unallocated resource in the resource set, and the second information indicates a request failure.

When the first resource is greater than the unallocated resource in the resource set, the radio frequency unit does not support the configuration of the first resource.

With reference to the solution in any one of the first aspect and the second aspect, the first information indicates that the attribute of the first resource is the basic resource, the first resource is greater than the unallocated resource in the resource set, a sum of the unallocated resource in the resource set and the allocated additional resource in the resource set is greater than or equal to the first resource, and the second information is used to configure the first resource; and the allocated additional resource in the resource set is used to serve a second distributed unit.

In this way, the radio frequency unit can preferentially guarantee the configuration of the basic resource.

With reference to the solution in any one of the first aspect and the second aspect, the first resource includes at least one of the following: a power resource, a transmission resource, or a bandwidth resource.

In this way, in this embodiment of this application, the radio frequency unit can flexibly configure one or more of the power resource, the transmission resource, or the bandwidth resource of the radio frequency unit.

With reference to the solution in any one of the first aspect and the second aspect, the first resource is a carrier-granularity resource.

The first distributed unit may apply to the radio frequency unit for a resource for each carrier at the granularity of the carrier. After the first distributed unit successfully requests a resource, the first distributed unit does not need to configure a resource for each carrier. This can effectively reduce resource configuration overheads of the first distributed unit.

According to a third aspect, a communication method is provided. The communication method includes: sending, by a first distributed unit, first information to a radio frequency unit, where the first information requests a first resource; and sending, by the radio frequency unit, second information to the first distributed unit, where the second information is determined based on resource allocation in a resource set of the radio frequency unit and the first resource, the resource set is usable by the radio frequency unit to serve at least two distributed units, and the at least two distributed units include the first distributed unit.

The first distributed unit and the radio frequency unit may be further configured to perform the methods in the first aspect and the second aspect, respectively.

According to a fourth aspect, a communication system is provided. The communication system includes a first distributed unit and a radio frequency unit. The first distributed unit is configured to send first information to the radio frequency unit, where the first information is used to request a first resource. The radio frequency unit is configured to receive the first information, and is further configured to send second information to the first distributed unit, where the second information is determined based on resource allocation in a resource set of the radio frequency unit and the first resource, the resource set is usable by the radio frequency unit to serve at least two distributed units, the at least two distributed units include the first distributed unit, and the second information is used to respond to the first information. The first distributed unit is further configured to receive the second information.

The first distributed unit and the radio frequency unit may be further configured to perform the methods in the first aspect and the second aspect, respectively.

According to a fifth aspect, a communication apparatus is provided. The communication apparatus may be a radio frequency unit, or may be a device, a module, or the like configured to perform a function of the radio frequency unit.

In a possible implementation, the communication apparatus may include modules or units in one-to-one correspondence with the methods/operations/steps/actions described in the first aspect. The modules or units may be implemented by a hardware circuit, software, or a combination of a hardware circuit and software.

According to a sixth aspect, a communication apparatus is provided. The communication apparatus may be a first distributed unit, or may be a device, a module, or the like configured to perform a function of the first distributed unit.

In a possible implementation, the communication apparatus may include modules or units in one-to-one correspondence with the methods/operations/steps/actions described in the second aspect. The modules or units may be implemented by a hardware circuit, software, or a combination of a hardware circuit and software.

According to a seventh aspect, a communication apparatus is provided. The communication apparatus includes an interface unit, configured to receive first information from a first distributed unit, where the first information requests a first resource. The interface unit is further configured to send second information to the first distributed unit, where the second information is determined based on resource allocation in a resource set of the radio frequency unit and the first resource, the resource set is usable by the radio frequency unit to serve at least two distributed units, and the at least two distributed units include the first distributed unit.

The communication apparatus may be further configured to perform the solution in the method according to the first aspect and any one of the possible implementations in the first aspect. Details are not described again.

According to an eighth aspect, a communication apparatus is provided. The communication apparatus includes an interface unit, configured to send first information to a radio frequency unit, where the first information requests a first resource. The interface unit is further configured to receive second information from the radio frequency unit, where the second information is determined based on resource allocation in a resource set of the radio frequency unit and the first resource, the at least two distributed units include the first distributed unit, and the second information is a response to the first information.

The communication apparatus may be further configured to perform the solution in the method according to the second aspect and any one of the possible implementations in the second aspect. Details are not described again.

According to a ninth aspect, a communication apparatus is provided. The communication apparatus includes a processor. The processor is configured to cause, by executing a computer program or instructions or by using a logic circuit, the communication apparatus to perform the method in the first aspect and any one of the possible implementations of the first aspect; or to cause the communication apparatus to perform the method in the second aspect and any one of the possible implementations of the second aspect; or to cause the communication apparatus to perform the method in the third aspect and any one of the possible implementations of the third aspect.

In a possible implementation, the communication apparatus further includes a memory, and the memory is configured to store the computer program or the instructions.

In a possible implementation, the communication apparatus further includes a communication interface, configured to input a signal and/or output a signal.

According to a tenth aspect, a communication apparatus is provided. The communication apparatus includes a logic circuit and an input/output interface. The input/output interface is configured to input and/or output a signal; and the logic circuit is configured to perform the method in the first aspect and any one of the possible implementations of the first aspect; the logic circuit is configured to perform the method in the second aspect and any one of the possible implementations of the second aspect; or the logic circuit is configured to perform the method in the third aspect and any one of the possible implementations of the third aspect.

According to an eleventh aspect, a computer-readable storage medium is provided. The computer-readable storage medium stores a computer program or instructions. When the computer program or the instructions run on a computer, the method in the first aspect and any one of possible implementations of the first aspect is performed; or the method in the second aspect and any one of possible implementations of the second aspect is performed; or the method in the third aspect and any one of possible implementations of the third aspect is performed.

According to a twelfth aspect, a computer program product is provided. The computer program product includes instructions. When the instructions run on a computer, the method in the first aspect and any one of possible implementations of the first aspect is performed; or the method in the second aspect and any one of possible implementations of the second aspect is performed; or the method in the third aspect and any one of possible implementations of the third aspect is performed.

According to a thirteenth aspect, a chip system is provided. The chip is connected to a memory, and the chip is configured to read and execute a software program stored in the memory, to perform the method in the first aspect and any one of the possible implementations of the first aspect; or perform the method in the second aspect and any one of the possible implementations of the second aspect; or perform the method in the third aspect and any one of the possible implementations of the third aspect.

According to a fourteenth aspect, a chip system is provided. The chip system includes: a communication interface, configured to communicate with another apparatus; and a processor, configured to enable a communication device on which the chip system is installed to perform the method in the first aspect and any one of the possible implementations of the first aspect, or configured to enable a communication device on which the chip system is installed to perform the method in the second aspect and any one of the possible implementations of the second aspect, or configured to enable a communication device on which the chip system is installed to perform the method in the third aspect and any one of the possible implementations of the third aspect.

According to a fifteenth aspect, a chip system is provided. The chip system includes a processor, a memory, and an input/output port. The memory is configured to store a computer program. The processor is configured to execute the computer program stored in the memory, to cause the processor to perform the method in the first aspect and any one of the possible implementations of the first aspect, or to cause the processor to perform the method in the second aspect and any one of the possible implementations of the second aspect, or to cause the processor to perform the method in the third aspect or any one of the possible implementations of the third aspect.

According to a sixteenth aspect, a chip system is provided. The chip system is applied to an electronic device, and the chip system includes one or more processors. The processor is configured to invoke computer instructions to enable the electronic device to perform the method in the first aspect or any one of the possible implementations of the first aspect, or the processor is configured to invoke computer instructions to enable the electronic device to perform the method in the second aspect or any one of the possible implementations of the second aspect, or the processor is configured to invoke computer instructions to enable the electronic device to perform the method in the third aspect or any one of the possible implementations of the third aspect.

For descriptions of beneficial effects of any one of the third aspect to the sixteenth aspect, refer to descriptions of beneficial effects of the first aspect and the second aspect.

### BRIEF DESCRIPTION OF DRAWINGS

FIG. 1 is a diagram of a communication architecture to which an embodiment of this application is applicable;
FIG. 2 is an interaction process diagram of a communication method according to an embodiment of this application;
FIG. 3 is an interaction process diagram of another communication method according to an embodiment of this application;
FIG. 4 is an interaction process diagram of still another communication method according to an embodiment of this application;
FIG. 5 is an interaction process diagram of yet still another communication method according to an embodiment of this application;
FIG. 6 is a block diagram of a communication apparatus according to an embodiment of this application; and
FIG. 7 is a block diagram of another communication apparatus according to an embodiment of this application.

### DESCRIPTION OF EMBODIMENTS

The technical solutions in this application are to be described below with reference to the accompanying drawings.

For ease of understanding embodiments of this application, the following descriptions are provided first.
1. Unless otherwise stated, "at least two or more" means two or more.
2. Unless otherwise stated or there is a logic conflict, terms and/or descriptions in various embodiments of this application are consistent and may be mutually referenced, and technical features in different embodiments may be combined into a new embodiment based on an internal logical relationship thereof.
3. Various numbers in this application are merely used for differentiation for ease of description, but are not used to limit the protection scope of this application. Sequence numbers in this application do not mean an execution sequence, and the execution sequence of processes should be determined based on functions and internal logic of the processes. For example, in this specification, the claims, and the accompanying drawings of this application, the terms "first", "second", "third", "fourth", and various other term numerals (if existent) are intended to distinguish between similar objects, but do not necessarily indicate a specific order or sequence. Data used in such a way is interchangeable in appropriate circumstances, so that embodiments described herein can be implemented in other orders than the order illustrated or described herein.
   In addition, any embodiment or design solution described as an "example" or "for example" in this application should not be explained as being more preferred or having more advantages than another embodiment or design solution. Exactly, use of the terms such as "example" or "for example" is intended to present a related concept in a specific manner for ease of understanding.
4. The terms "include", "have", and any other variant thereof are intended to cover a non-exclusive inclusion. For example, a process, a method, a system, a product, or a device that includes a list of operations or units is not necessarily limited to those expressly listed operations or units, but may include other operations or units not expressly listed or inherent to the process, the method, the product, or the device.
5. In this application, "indicate" may be understood as "enable", and "enable" may include "directly enable" and "indirectly enable". When a piece of information is described to enable A, the information may directly enable A or indirectly enable A, but it does not mean that the information definitely carries A.
   Information enabled by the information is referred to as to-be-enabled information. In a specific implementation process, the to-be-enabled information may be enabled in many manners, for example, but not limited to, the to-be-enabled information may be directly enabled, such as the to-be-enabled information or an index of the to-be-enabled information. Alternatively, the to-be-enabled information may be indirectly enabled by enabling other information, where there is an association relationship between the other information and the to-be-enabled information. Alternatively, only a part of the to-be-enabled information may be enabled, and other parts of the to-be-enabled information are known or agreed in advance. For example, specific information may be enabled through a pre-agreed (for example, specified in a protocol) sequence of all information, so as to reduce enabling overheads to some extent. In addition, a common part of all information may be identified and enabled in a unified manner, so as to reduce enabling overheads caused by enabling the same information separately.
6. In this application, the term "pre-configuration" may include predefinition, for example, definition in a protocol. The "predefinition" may be implemented by pre-storing, in a device (including, for example, network elements), corresponding code, a corresponding table, or other related information that may be used for indication. A specific implementation thereof is not limited in this application.
7. "Storage" or "store" in this application may mean "being stored" in one or more memories. The one or more memories may be separately disposed, or may be integrated into an encoder, a decoder, a processor, or a communication apparatus. Alternatively, a part of the one or more memories may be separately disposed, and a part of the one or more memories are integrated into the translator, the processor, or the communication apparatus. A type of the memory may be a storage medium in any form. This is not limited.
8. The "protocol" in this application may refer to a standard protocol in the field of communication, for example, may include a fourth generation (4^{th} generation, 4G) network protocol, a fifth generation (5^{th} generation, 5G) network protocol, an NR protocol, a 5.5G network protocol, a sixth generation (6^{th} generation, 6G) network protocol, and a related protocol applied to a future communication system. This is not limited in this application.
9. Arrows or blocks shown by dashed lines in diagrams of the accompanying drawings in this specification of this application indicate optional steps or optional modules.
10. Unless otherwise stated, "/" represents an "or" relationship between associated objects. For example, A/B may represent A or B. "And/or" in this application describes only an association relationship of associated objects and represents that three relationships may exist. For example, A and/or B may represent the following three cases: Only A exists, both A and B exist, and only B exists, where A and B may be singular or plural.

First, a communication system to which an embodiment of this application is applicable is described.

The technical solutions provided in this application may be applied to various communications systems, for example, a 5G or NR system, a long term evolution (long term evolution, LTE) system, an LTE frequency division duplex (frequency division duplex, FDD) system, an LTE time division duplex (time division duplex, TDD) system, a wireless local area network (wireless local area network, WLAN) system, a satellite communication system, a future communication system, such as a 6G mobile communication system, or a system integrating a plurality of systems. The technical solutions provided in this application may also be applied to device-to-device (device-to-device, D2D) communication, vehicle-to-everything (vehicle-to-everything, V2X) communication, machine-to-machine (machine-to-machine, M2M) communication, machine type communication (machine type communication, MTC), an internet of things (internet of things, IoT) communication system, or another communication system.

A device in a communication system may send a signal to another device or receive a signal from another device. The signal may include information, signaling, data, or the like. The device may alternatively be replaced with an entity, a network entity, a communication device, a communication module, a node, a communication node, or the like. In embodiments of this application, the device is used as an example for description.

In embodiments of this application, a network device may be a device for communicating with the terminal device. The network device may also be referred to as an access network device or a radio access network device. For example, the network device may be a base station. The network device in embodiments of this application may be a radio access network (radio access network, RAN) node (or device) that connects the terminal device to a wireless network. The base station may cover any of the following names in a broad sense, or may be replaced with the following names, for example, a NodeB (NodeB), an evolved NodeB (evolved NodeB, eNB), a next generation NodeB (next generation NodeB, gNB), a relay station, an access point, a transmitting and receiving point (transmitting and receiving point, TRP), a transmitting point (transmitting point, TP), a primary station, a secondary station, a multi-standard radio (motor slide retainer, MSR) node, a home base station, a network controller, an access node, a radio node, an access point (access point, AP), a transmission node, a transceiver node, a baseband unit (baseband unit, BBU), a remote radio unit (remote radio unit, RRU), an active antenna unit (active antenna unit, AAU), a remote radio head (remote radio head, RRH), a central unit (central unit, CU), a distributed unit (distributed unit, DU), a radio unit (radio unit, RU), or a positioning node. The base station may be a macro base station, a micro base station, a relay node, a donor node, or the like, or a combination thereof.

The base station may alternatively be a communication module, a modem, or a chip arranged in the foregoing device or apparatus. The base station may alternatively be a mobile switching center, a device that bears a base station function in D2D, V2X, and M2M communication, a network side device in a 6G network, a device that bears a base station function in a future communication system, or the like. The base station may support networks using a same access technology or different access technologies. Optionally, the RAN node may alternatively be a server, a wearable device, a vehicle, a vehicle-mounted device, or the like. For example, an access network device in a V2X technology may be a road side unit (road side unit, RSU). A specific technique and a specific device form that are used by the network device are not limited in embodiments of this application.

The base station may be fixed or mobile. For example, a helicopter or an uncrewed aerial vehicle may be configured as a mobile base station, and one or more cells may move based on a position of the mobile base station. In another example, the helicopter or the uncrewed aerial vehicle may be configured as a device for communicating with another base station.

In some deployments, the network device mentioned in embodiments of this application may be a device including a CU or a DU, a device including a CU and a DU, or a device including a control plane CU node (a central unit-control plane (central unit-control plane, CU-CP)), a user plane CU node (a central unit-user plane (central unit-user plane, CU-UP)), and a DU node. For example, the network device may include a gNB-CU-CP, a gNB-CU-UP, and a gNB-DU.

In some deployments, a plurality of RAN nodes collaborate to assist the terminal in implementing radio access, and different RAN nodes respectively implement some functions of the base station. For example, the RAN node may be a CU, a DU, a CU-CP, a CU-UP, or an RU. The CU and the DU may be separately disposed, or may be included in a same network element, for example, a BBU. The RU may be included in a radio frequency device or a radio frequency unit, for example, included in an RRU, an AAU, or an RRH.

The RAN node may support one or more types of fronthaul interfaces, and different fronthaul interfaces respectively correspond to DUs and RUs having different functions. If a fronthaul interface between a DU and an RU is a common public radio interface (common public radio interface, CPRI), the DU is configured to implement one or more baseband functions, and the RU is configured to implement one or more radio frequency functions. If the fronthaul interface between the DU and the RU is another type of interface, in comparison with the CPRI, some downlink and/or uplink baseband functions, for example, for downlink, one or more of precoding (precoding), digital beamforming (beamforming, BF), or inverse fast Fourier transform (inverse fast Fourier transform, IFFT)/cyclic prefix (cyclic prefix, CP) addition are moved from the DU to the RU for implementation; and for uplink, one or more of digital beamforming (beamforming, BF) or fast Fourier transform (fast Fourier transform, FFT)/cyclic prefix (cyclic prefix, CP) removal are moved from the DU to the RU for implementation.

In a possible design, a processing unit for implementing a baseband function in the BBU is referred to as a base band high (base band high, BBH) unit, and a processing unit for implementing a baseband function in the RRU/AAU/RRH is referred to as a base band low (base band low, BBL) unit.

In different systems, the CU (or the CU-CP and the CU-UP), the DU, or the RU may have different names, but a person skilled in the art may understand meanings of the names. For example, in an ORAN system, the CU may also be referred to as an O-CU (open CU), the DU may also be referred to as an O-DU, the CU-CP may also be referred to as an O-CU-CP, the CU-UP may also be referred to as an O-CU-UP, and the RU may also be referred to as an O-RU. Any one of the CU (or the CU-CP or the CU-UP), the DU, and the RU in this application may be implemented by using a software module, a hardware module, or a combination of a software module and a hardware module.

In embodiments of this application, an apparatus configured to implement a function of a network device may be a network device, or an apparatus that can support the network device in implementing the function, for example, a chip system, a hardware circuit, a software module, or a combination of a hardware circuit and a software module. The apparatus may be installed in the network device or used in combination with the network device. In embodiments of this application, an example in which the apparatus configured to implement the function of the network device is the network device is merely used for description, and constitutes no limitation on the solutions in embodiments of this application.

The network device may be deployed on land, including indoor or outdoor, or handheld or vehicle-mounted, or may be deployed on a water surface, or may alternatively be deployed on an airplane, a balloon, and a satellite in the air.

It should be noted that a scenario in which the network device is located is not limited in embodiments of this application. In addition, the network device may be a hardware device, or may be a software function run on dedicated hardware or a software function run on general-purpose hardware, for example, a virtual function instantiated on a platform (for example, a cloud platform) or an entity including a dedicated or general-purpose hardware device and a software function. A specific form of the network device is not limited in this application.

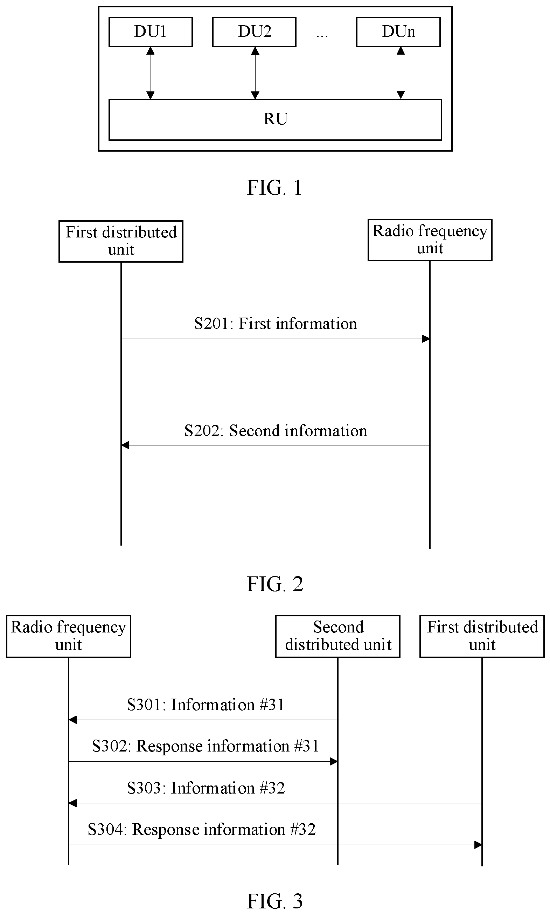

A communication architecture in an embodiment of this application is described below with reference to FIG. 1.

FIG. 1 is a diagram of a communication architecture to which an embodiment of this application is applicable. As shown in FIG. 1, the communication architecture includes an RU and a plurality of DUs (for example, DU1, DU2, ..., and DUn). An information exchange channel exists between the RU and each DU.

In the communication architecture shown in FIG. 1, the RU may be shared by the plurality of DUs, or the RU may be managed by the plurality of DUs. For example, resources (attributes or types of the resources are not limited. For example, the resources may include one or more of a power resource, a bandwidth resource, or a transmission resource) of the RU can be allocated to the plurality of DUs, or the plurality of DUs may share the resources of the RU. However, currently, resources are configured for the plurality of DUs in a fixed manner. For example, the RU fixedly configures a resource for each DU, and whether the DU needs more resources or whether there is a surplus resource in resources of the RU is not considered. Consequently, utilization of the resources of the RU may not be high, or the resources of the RU are not used in an efficient manner.

It should be noted that the communication architecture shown in FIG. 1 is merely used as an example for description, and is not used as a final limitation. In addition, the technical solutions provided in this application are applicable to a communication system obtained by evolving the communication architecture shown in FIG. 1, for example, including but not limited to an open radio access system (open radio access network, O-RAN). This is not limited herein.

In view of this, this application provides a communication method, a communication apparatus, and a communication system, to support improvement of utilization of resources of a radio frequency unit.

The communication method in embodiments of this application is described below with reference to the accompanying drawings.

For ease of understanding and description, the communication method in embodiments of this application is described below by using exchange between the radio frequency unit and a first distributed unit as an example. However, this shall not constitute any limitation on an execution body of the communication method in embodiments of this application. For example, the radio frequency unit may be replaced with a component (such as a circuit, a chip, or a chip system) configured in the radio frequency unit, and the first distributed unit may be replaced with a component (such as a circuit, a chip, or a chip system) configured in the first distributed unit.

FIG. 2 is an interaction flowchart of a communication method according to an embodiment of this application. As shown in FIG. 2, the method includes the following steps.

S201: A first distributed unit sends first information to a radio frequency unit.

Correspondingly, the radio frequency unit receives the first information.

The first information is used by the first distributed unit to request (or may be understood as requesting configuration) a first resource from the radio frequency unit, where the first resource belongs to a resource set of the radio frequency unit, and the resource set can be used by the radio frequency unit to serve at least two distributed units, or the radio frequency unit may allocate or configure resources in the resource set, or the at least two distributed units may share the resource set of the radio frequency unit. The at least two distributed units include the first distributed unit.

In a possible implementation, the first information may further indicate an attribute of the first resource. The attribute (which may also be replaced with another term, for example, a type or a kind) of the first resource includes a basic resource or an additional resource (where the additional resource may be referred to as a non-basic resource, may be replaced with an extended resource or another resource name, or the like).

In this embodiment of this application, the basic resource is a resource configured based on coverage and planning of a cell. In other words, the basic resource is a resource obtained by manual planning based on static information such as a coverage radius of a cell and a cell bandwidth, and may be used on all downlink physical channels including a common channel. Optionally, the basic resource may also be understood as a resource used to provide a service (or a basic service) in coverage of a cell.

For example, a distributed unit may use the basic resource to provide a basic communication function in the coverage of the cell. For example, the basic communication function may include a voice service and a short message service, or may include some non-latency-sensitive services. The foregoing basic resource may include a power resource of the cell, or include a communication resource between the distributed unit and the radio frequency unit, or the like.

In this embodiment of this application, the additional resource is a resource used to improve user experience. For example, the additional resource may be a resource obtained through calculation based on a dynamically changing scenario such as cell load and very important person (very important person, VIP) personnel assurance, and may be used on a user-level downlink physical channel, so as to improve a user throughput rate.

For example, a distributed unit may use the additional resource to improve user experience. For example, a latency of a communication service based on the basic resource is 5 seconds, and a latency of the communication service based on the additional resource is 1 second. The additional resource may include a power resource of a cell or the like.

The basic resource is distinguished from the additional resource, so that the radio frequency unit may meet requirements of different distributed units, for example, meet requirements of a part of distributed units for providing only a basic communication function, or meet requirements of a part of distributed units for improving user experience.

For example, the first information includes one or more bits, and different values of the one or more bits respectively indicate different attributes of the first resource. For example, the first information includes one bit, and a value of the bit is 0 or 1. 0 may indicate that the attribute of the first resource is the basic resource, and 1 may indicate that the attribute of the first resource is the additional resource.

The attribute of the first resource is indicated, so that the radio frequency unit may determine, based on the attribute of the first resource, whether the first resource required by the first distributed unit needs to be configured for the first distributed unit. For example, a configuration priority of the basic resource is higher than a configuration priority of the additional resource. In other words, the radio frequency unit preferentially allocates a resource to the applied basic resource, or it is understood as that when the attribute of the first resource is the basic resource, the radio frequency unit preferentially ensures that the basic resource is configured.

In a possible implementation, the first resource may be one or more of a power resource, a bandwidth resource, or a transmission resource.

For example, the first resource is the power resource. In this case, S201 may be understood as that the first distributed unit requests the radio frequency unit to configure a first power resource.

For example, the first resource is the bandwidth resource. In this case, S201 may be understood as that the first distributed unit requests the radio frequency unit to configure a first bandwidth resource.

For example, the first resource is the transmission resource (for example, a frequency domain resource and/or a time domain resource). In this case, S201 may be understood as that the first distributed unit requests the radio frequency unit to configure a first transmission resource.

For example, the first resource includes the power resource and the bandwidth resource. In this case, S201 may be understood as that the first distributed unit requests the radio frequency unit to configure the first power resource and the first bandwidth resource.

For example, the first resource includes the power resource and the transmission resource. In this case, S201 may be understood as that the first distributed unit requests the radio frequency unit to configure the first power resource and the first transmission resource.

For example, the first resource may include the bandwidth resource and the transmission resource. In this case, S201 may be understood as that the first distributed unit requests the radio frequency unit to configure the first bandwidth resource and the first transmission resource.

For example, the first resource includes the power resource, the bandwidth resource, and the transmission resource. In this case, S201 may be understood as that the first distributed unit requests the radio frequency unit to configure the first power resource, the first bandwidth resource, and the first transmission resource.

For ease of description, a specific type of the first resource is not distinguished below.

In this way, in this embodiment of this application, the radio frequency unit can flexibly configure one or more of the power resource, the transmission resource, or the bandwidth resource of the radio frequency unit.

S202: The radio frequency unit sends second information to the first distributed unit.

Correspondingly, the first distributed unit receives the second information.

The second information is used to respond to the first information. The second information is determined based on the first resource and resource allocation in the resource set.

The resource allocation in the resource set may be understood as an allocated resource in the resource set and/or an unallocated resource in the resource set. The allocated resource and the unallocated resource are relative.

In embodiments of this application, the radio frequency unit may determine the second information in the following several manners.

### Scenario #1

The radio frequency unit determines, based on the first resource and the unallocated resource in the resource set, whether to configure the first resource.

The following provides descriptions by using an example in which a total quantity of resources (using the power resource as an example) in the resource set is 100 W (watts), and the unallocated resource is 20 W (the allocated resource is 80 W).

### Example #1-1

The first distributed unit requests to configure the first resource of 30 W. Because the unallocated resource in the resource set is less than the first resource, the radio frequency unit does not support or does not allow the request of the first distributed unit. Alternatively, the radio frequency unit does not configure the resource of 30 W for the first distributed unit.

### Example #1-2

The first distributed unit requests to configure the first resource of 15 W. Because the unallocated resource in the resource set is more than the first resource, the radio frequency unit supports the request of the first distributed unit. Alternatively, the radio frequency unit configures the first resource of 15 W for the first distributed unit.

In conclusion, when the radio frequency unit determines, based on a relationship between a size of the first resource and a size of the unallocated resources in the resource set, to configure the first resource for the first distributed unit, the second information indicates that configuration of the first resource is agreed, or the second information is understood as configuration information of the first resource. When the radio frequency unit determines that the first resource cannot be configured for the first distributed unit, the second information indicates that configuration of the first resource is not agreed.

### Scenario #2

The radio frequency unit is determined based on an attribute of the first resource, the first resource, and the resource allocation in the resource set.

In this embodiment of this application, resources in the resource set may be classified into two types: the basic resource and the additional resource. The resource allocation in the resource set may include allocation of the basic resource (for example, an allocated basic resource and an unallocated basic resource) and allocation of the additional resource (for example, an allocated additional resource and an unallocated additional resource).

In this embodiment of this application, a proportion of the basic resource in the resource set may be greater than or equal to a proportion of the additional resource in the resource set. For example, the radio frequency unit may use most resources in the resource set as the basic resource. After a total quantity of resources in the resource set can meet requirements of a plurality of distributed units for the basic resource, when there is still a part of remaining resources (for example, the unallocated resource) in the resource set, the radio frequency unit may use the part of remaining resources as the additional resource, and configure the additional resource for a part or all of the plurality of distributed units. In other words, an importance degree of configuration of the basic resource is higher than an importance degree of configuration of the additional resource. In addition, the foregoing resources of any type may be configured in a flexible configuration manner. For example, the radio frequency unit may perform configuration based on a request of the distributed unit.

For further descriptions of the scenario #2, refer to descriptions of the scenario #2a and the scenario #2b.

### Scenario #2a

The radio frequency unit determines the second information based on the attribute of the first resource, the first resource, and the unallocated resource in the resource set.

The following provides descriptions by using an example in which the total quantity of resources in the resource set is 100 W, and the unallocated resource is 20 W (the allocated resource (an attribute of the resource is not limited) is 80 W).

### Example #2a-1

The first distributed unit requests to configure the first resource (which is the basic resource) of 30 W. Because the unallocated resource in the resource set is less than the first resource, the radio frequency unit does not support the request of the first distributed unit. Alternatively, the radio frequency unit does not configure the basic resource of 30 W for the first distributed unit.

### Example #2a-2

The first distributed unit requests to configure the first resource (which is the basic resource) of 10 W. Because the unallocated resource in the resource set is greater than the first resource, the radio frequency unit supports or allows the request of the first distributed unit. Alternatively, the radio frequency unit configures the basic resource of 10 W for the first distributed unit.

### Example #2a-3

The first distributed unit requests to configure the first resource (which is the additional resource) of 30 W. Because the unallocated resource in the resource set is less than the first resource, the radio frequency unit does not support the request of the first distributed unit. Alternatively, the radio frequency unit does not configure the additional resource of 30 W for the first distributed unit.

### Example #2a-4

The first distributed unit requests to configure the first resource (which is the additional resource) of 10 W. Because the unallocated resource in the resource set is more than the first resource, the radio frequency unit supports the request of the first distributed unit. Alternatively, the radio frequency unit configures the additional resource of 10 W for the first distributed unit.

In a possible implementation, when the attribute of the first resource is the additional resource, the radio frequency unit may further determine, based on a proportion threshold of the unallocated resource in the resource set, whether the first resource can be configured.

For example, when a proportion of the unallocated resource in the resource set is less than a threshold (for example, 5%), if the first distributed unit requests the radio frequency unit to configure an additional resource, and the additional resource applied by the first distributed unit is less than the unallocated resource in the resource set, the radio frequency unit determines not to configure the additional resource for the first distributed unit. In this way, resource configuration may be provided for another distributed unit that desires to apply for the basic resource.

When the radio frequency unit determines, based on the unallocated resource in the resource set, whether to configure the first resource, this does not change configuration of the allocated resource in the resource set of the radio frequency unit.

### Scenario #2b

The radio frequency unit determines the second information based on the attribute of the first resource, the first resource, the unallocated resource in the resource set, and the allocated additional resource in the resource set.

The following provides descriptions by using an example in which the total quantity of resources in the resource set is 100 W, the unallocated resource is 20 W, the allocated basic resource is 60 W, and the allocated additional resource is 20 W.

In this embodiment of this application, the allocated additional resource in the resource set may be reconfigured. Alternatively, when the radio frequency unit determines that the first resource whose attribute is the basic resource can be configured for the first distributed unit, the radio frequency unit may reclaim a part or an entirety of the allocated additional resource for the first distributed unit to use. For example, the radio frequency unit has configured the additional resource of 20 W for the second distributed unit. When the first distributed unit requests the radio frequency unit to configure the basic resource of 30 W, and the unallocated resource (for example, 15 W) in the resource set is less than the first resource, the radio frequency unit may reclaim a part of the configured additional resource of 20 W for the first distributed unit to use.

### Example #2b-1

The first distributed unit requests configuration of the basic resource of 30 W. Because the unallocated resource in the resource set is less than the first resource, the radio frequency unit may reclaim a part of the allocated additional resource for the first distributed unit to use.

In this way, the radio frequency unit can preferentially ensure configuration of the basic resource.

### Example #2b-2

The first distributed unit requests configuration of the basic resource of 20 W. Because the unallocated resource in the resource set is equal to the first resource, the radio frequency unit may configure the unallocated resource for the first distributed unit.

### Example #2b-3

The first distributed unit requests configuration of the additional resource of 30 W. Because the unallocated resource in the resource set is less than the first resource, the radio frequency unit may not configure the additional resource of 30 W for the first distributed unit.

In a possible implementation, when the attribute of the first resource is the additional resource, the radio frequency unit may determine, based on a proportion threshold of the additional resource in the resource set, whether to configure the first resource.

For example, the first distributed unit requests configuration of the additional resource of 10 W, but a proportion of the additional resource in the resource set has a threshold, for example, 20%. In this case, a total quantity of additional resources that can be allocated in the resource set is 20 W. Because the additional resource allocated in the resource set is 20 W, and an upper limit is reached, the radio frequency unit may not configure the additional resource of 10 W for the first distributed unit. In this way, resource configuration may be provided for another distributed unit that desires to apply for the basic resource.

In conclusion, the radio frequency unit and the first distributed unit may exchange the first information and the second information. The radio frequency unit can flexibly configure the resource of the radio frequency unit based on information exchange about a resource configuration of the radio frequency unit and the first distributed unit, so that the resource of the radio frequency unit can be fully configured. For example, when a remaining resource exists in a resource set of the radio frequency unit, the first distributed unit requests the radio frequency unit to configure a part or an entirety of the remaining resource, and the radio frequency unit determines, based on the request of the first distributed unit, whether the remaining resource can be configured. In this way, utilization of the resources of the radio frequency unit can be effectively improved.

Compared with a solution in which the resources of the radio frequency unit are configured in a static configuration manner (for example, the radio frequency unit pre-configures resources for the distributed unit, without considering whether there is a remaining resource in the resources of the radio frequency unit, and without considering whether the distributed unit has an actual requirement for using the resources), a solution in which the distributed unit requests resources to be configured from the radio frequency unit can support the effective configuration of the resources of the radio frequency unit in this embodiment of this application.

For example, it may be avoided that the radio frequency unit cannot use the remaining resource in the resource set. For another example, when the distributed unit does not have an actual requirement for using pre-configured resources, the resources are in an invalid utilization state. When the distributed unit may request the radio frequency unit to configure a resource based on a requirement of the distributed unit, resource utilization may be effectively improved.

In conclusion, embodiments of this application can support effective configuration of the resource of the radio frequency unit, thereby supporting improvement of utilization of the resource of the radio frequency unit.

The method shown in FIG. 2 is further described below with reference to FIG. 3 to FIG. 5. Content shown in FIG. 3 to FIG. 5 may be understood as an example of how the radio frequency unit determines the second information in FIG. 2.

It should be noted that the content shown in FIG. 3 to FIG. 5 is described by using an example in which the first information indicates the attribute of the first resource. When the first information does not indicate the attribute of the first resource, the radio frequency unit may also determine, with reference to the content shown in FIG. 3 to FIG. 5, how to configure the second information. This is not limited herein.

FIG. 3 is an interaction process diagram of another communication method according to an embodiment of this application. As shown in FIG. 3, the method includes the following steps.

S301: A second distributed unit sends information #31 to a radio frequency unit.

Correspondingly, the radio frequency unit receives the information #31. The information #31 is used by the second distributed unit to request a resource #31 from the radio frequency unit, where an attribute of the resource #31 is a basic resource.

S302: The radio frequency unit sends response information #31 to the second distributed unit.

Correspondingly, the second distributed unit receives the response information #31. The response information #31 is used to respond to the information #31.

For ease of description, descriptions are provided below by using an example in which the response information #31 indicates that the radio frequency unit agrees to configure the resource #31, but an application scenario in which the response information #31 indicates that the radio frequency unit does not agree to configure the resource #31 is not limited.

For ease of description, descriptions are provided below by using an example in which a total quantity of resources in a resource set is 100 W (unallocated).

The second distributed unit requests the radio frequency unit to configure the resource #31, where a value of the resource #31 is 40 W and is less than 100 W. Therefore, the radio frequency unit may agree to configure the resource #31 for the second distributed unit. Correspondingly, a total quantity of unallocated resources in the resource set is 60 W.

S303: The first distributed unit sends information #32 (which may be the foregoing first information) to the radio frequency unit.

Correspondingly, the radio frequency unit receives the information #32. The information #32 is used by the first distributed unit to request a resource #32 from the radio frequency unit, where an attribute of the resource #32 is the basic resource.

S304: The radio frequency unit sends response information #32 (which may be the foregoing second information) to the first distributed unit.

Correspondingly, the first distributed unit receives the response information #32. The response information #32 is used to respond to the information #32.

After the second distributed unit successfully requests the resource #31 from the radio frequency unit, the total quantity of unallocated resources in the resource set decreases. After the radio frequency unit receives the information #32 sent by the first distributed unit, the radio frequency unit may determine, based on the resource #32 and the unallocated resource in the resource set, whether to agree to or support configuration of the resource #32.

For example, a value of the resource #32 is 30 W and is less than 60 W. Therefore, the radio frequency unit may agree to configure the resource #32 for the first distributed unit. Correspondingly, the total quantity of unallocated resources in the resource set is 30 W.

In conclusion, the radio frequency unit can flexibly configure a resource of the radio frequency unit based on information exchange about resource configuration between the radio frequency unit and the first distributed unit, so that the resource of the radio frequency unit can be fully configured. For example, when a remaining resource exists in the resource set of the radio frequency unit, the radio frequency unit can determine, based on the request of the first distributed unit, whether to configure the remaining resource. In this way, utilization of the resource of the radio frequency unit can be effectively improved. In the solution shown in FIG. 3, after the second distributed unit successfully requests the resource (for example, the basic resource) from the radio frequency unit, the radio frequency unit may determine, based on the unallocated resource in the resource set, whether to support configuration of the resource for the first distributed unit. For details, refer to the descriptions of the scenario #1.

In addition, FIG. 3 is described by using an example in which the first distributed unit requests the radio frequency unit to configure the basic resource. When the first distributed unit requests the radio frequency unit to configure an additional resource, the radio frequency unit may determine, based on the content shown in FIG. 3, whether to configure the additional resource for the first distributed unit.

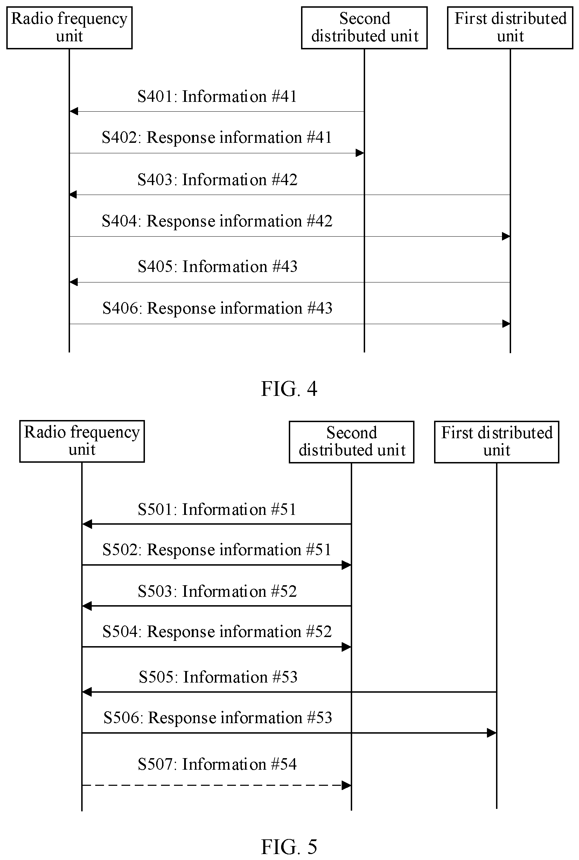

FIG. 4 is an interaction process diagram of still another communication method according to an embodiment of this application. As shown in FIG. 4, the method includes the following steps.

S401: A second distributed unit sends information #41 to a radio frequency unit.

Correspondingly, the radio frequency unit receives the information #41. The information #41 is used to request a resource #41, and an attribute of the resource #41 is a basic resource.

For specific descriptions, refer to the descriptions of S301. Details are not described again.

S402: The radio frequency unit sends response information #41 to the second distributed unit.

Correspondingly, the second distributed unit receives the response information #41. The response information #41 is used to respond to the information #41.

For ease of description, descriptions are provided below by using an example in which the response information #41 indicates that the radio frequency unit agrees to configure the resource #41, but an application scenario in which the response information #41 indicates that the radio frequency unit does not agree to configure the resource #41 is not limited.

For ease of description, descriptions are provided below by using an example in which a total quantity of resources in a resource set is 100 W (unallocated).

The second distributed unit requests the radio frequency unit to configure the resource #41, where a value of the resource #41 is 40 W and is less than 100 W. Therefore, the radio frequency unit may agree to configure the resource #41 for the second distributed unit. Correspondingly, a total quantity of unallocated resources in the resource set is 60 W.

S403: A first distributed unit sends information #42 to the radio frequency unit.

Correspondingly, the radio frequency unit receives the information #42. The information #42 is used to request a resource #42, and an attribute of the resource #42 is a basic resource.

S404: The radio frequency unit sends response information #42 to the first distributed unit.

Correspondingly, the first distributed unit receives the response information #42. The response information #42 is used to respond to the information #42.

For example, the first distributed unit requests the radio frequency unit to configure the resource #42, where a value of the resource #42 is 30 W and is less than 60 W. Therefore, the radio frequency unit may agree to configure the resource #42 for the first distributed unit. Correspondingly, a total quantity of unallocated resources in the resource set is 30 W.

S405: The first distributed unit sends information #43 (which may be the foregoing first information) to the radio frequency unit.

Correspondingly, the radio frequency unit receives the information #43. The information #43 is used to request a resource #43, and an attribute of the resource #43 is an additional resource.

S406: The radio frequency unit sends response information #43 (which may be the foregoing second information) to the first distributed unit.

Correspondingly, the first distributed unit receives the response information #43. The response information #43 is used to respond to the information #43.

For example, the first distributed unit requests the radio frequency unit to configure the resource #43, where a value of the resource #43 is 10 W and is less than 30 W. Therefore, the radio frequency unit may agree to configure the resource #43 for the first distributed unit. Correspondingly, a total quantity of unallocated resources in the resource set is 20 W.

After the second distributed unit and the first distributed unit respectively successfully requests the resource #41 and the resource #42 from the radio frequency unit, a total quantity of unallocated resources in the resource set decreases. After the radio frequency unit receives the information #43 sent by the first distributed unit, the radio frequency unit may determine, based on the resource #43 and the unallocated resource in the resource set, whether to agree to or support configuration or allocation of the resource #43.

For specific descriptions of determining the second information by the radio frequency unit, refer to the descriptions of S202. Details are not described again.

In conclusion, the radio frequency unit can flexibly configure a resource of the radio frequency unit based on information exchange about resource configuration between the radio frequency unit and the first distributed unit, so that the resource of the radio frequency unit can be fully configured. For example, when a remaining resource exists in a resource set of the radio frequency unit, the first distributed unit requests the radio frequency unit to configure a part or an entirety of the remaining resource, and the radio frequency unit determines, based on the request of the first distributed unit, whether the remaining resource can be configured. In this way, utilization of the resources of the radio frequency unit can be effectively improved.

In the solution shown in FIG. 4, after the first distributed unit successfully requests the basic resource from the radio frequency unit, when the first distributed unit continues to request the radio frequency unit to configure an additional resource, the radio frequency unit may determine, based on the unallocated resource in the resource set, whether to support configuration of the resource for the first distributed unit. For details, refer to the descriptions of the scenario #1.

FIG. 3 and FIG. 4 are described by using an example in which the radio frequency unit determines, based on the unallocated resource in the resource set, whether to configure a first resource (for example, the resource #32 in FIG. 3 and the resource #43 in FIG. 4) for the first distributed unit. With reference to FIG. 5, the following describes a scenario in which the radio frequency unit determines, based on an allocated additional resource and an unallocated resource in the resource set, whether to configure the first resource for the first distributed unit. For ease of description, descriptions are provided below by using an example in which the first distributed unit requests to configure the basic resource.

FIG. 5 is an interaction process diagram of yet still another communication method according to an embodiment of this application. As shown in FIG. 5, the method includes the following steps.

S501: A second distributed unit sends information #51 to a radio frequency unit.

Correspondingly, the radio frequency unit receives the information #51. The information #51 is used to request a resource #51, and an attribute of the resource #51 is a basic resource.

S502: The radio frequency unit sends response information #51 to the second distributed unit.

Correspondingly, the second distributed unit receives the response information #51. The response information #51 is used to respond to the information #51.

For ease of description, descriptions are provided below by using an example in which the response information #51 indicates that the radio frequency unit agrees to configure the resource #51, but an application scenario in which the response information #51 indicates that the radio frequency unit does not agree to configure the resource #51 is not limited.

For ease of description, descriptions are provided below by using an example in which a total quantity of resources in a resource set is 100 W (unallocated).

The second distributed unit requests the radio frequency unit to configure the resource #51, where a value of the resource #51 is 40 W and is less than 100 W. Therefore, the radio frequency unit may agree to configure the resource #51 for the second distributed unit. Correspondingly, a total quantity of unallocated resources in the resource set is 60 W.

S503: The second distributed unit sends information #52 to the radio frequency unit.

Correspondingly, the radio frequency unit receives the information #52. The information #52 is used by the second distributed unit to request a resource #52 from the radio frequency unit, where an attribute of the resource #52 is an additional resource.

S504: The radio frequency unit sends response information #52 to the second distributed unit.

Correspondingly, the second distributed unit receives the response information #52. The response information #52 is used to respond to the information #52.

The second distributed unit requests the radio frequency unit to configure the resource #52, where a value of the resource #52 is 35 W and is less than 60 W. Therefore, the radio frequency unit may agree to configure the resource #52 for the second distributed unit. Correspondingly, a total quantity of unallocated resources in the resource set is 25 W.

S505: The first distributed unit sends information #53 (which may be the foregoing first information) to the radio frequency unit.

Correspondingly, the radio frequency unit receives the information #53. The information #53 is used to request a resource #53, and an attribute of the resource #53 is the basic resource.

S506: The radio frequency unit sends the response information #53 to the first distributed unit. The response information #53 is used to respond to the information #53.

Correspondingly, the first distributed unit receives the response information #53.

The first distributed unit requests the radio frequency unit to configure the resource #53, where a value of the resource #53 is 45 W, and the value of the resource #53 is greater than 25 W and less than 35 W+25 W. Therefore, the radio frequency unit may reclaim the resource of 20 W from the 35 W configured for the second distributed unit, and configure the resource #53 for the second distributed unit in combination with the unallocated resource of 25 W. Correspondingly, a total quantity of unallocated resources in the resource set is 0 W.

After the second distributed unit respectively successfully requests the resource #51 and the resource #52 from the radio frequency unit, a total quantity of unallocated resources in the resource set decreases. After the radio frequency unit receives the information #53 sent by the first distributed unit, the radio frequency unit may determine, based on the resource #53, the unallocated resource, and the allocated additional resource, whether to support configuration of the resource #53. For specific descriptions, refer to the descriptions of the scenario #2b in S202. In conclusion, the radio frequency unit can flexibly configure a resource of the radio frequency unit based on information exchange about resource configuration between the radio frequency unit and the first distributed unit, so that the resource of the radio frequency unit can be fully configured.

Optionally, the method may further include the following step.

S507: The radio frequency unit sends information #54 (which may be understood as third information) to the second distributed unit, where the information #54 indicates that the allocated additional resource in the resource set that corresponds to the second distributed unit has changed.

Correspondingly, the second distributed unit receives the information #54.

After the radio frequency unit reclaims a part of the additional resource configured for the second distributed unit, the radio frequency unit may send, to the second distributed unit, the information #54 indicating that the allocated additional resource in the resource set changes, and the second distributed unit may determine, based on this, that the originally configured additional resource of 35 W changes to a resource of 15 W. Correspondingly, the second distributed unit may adjust a manner of using the additional resource by the second distributed unit.

In this way, the second distributed unit may determine, based on the third information, that a resource quantity of the additional resource that has been successfully requested changes, and may adjust, in a timely manner, a manner of using the additional resource. For example, the second distributed unit may provide a proper service for a user based on the adjusted additional resource.

In the solutions shown in FIG. 2 to FIG. 5, the radio frequency unit may further send fourth information to the first distributed unit and/or the second distributed unit, where the fourth information may indicate resource allocation in the resource set. The first distributed unit and/or the second distributed unit may determine, based on the resource allocation in the resource set that is indicated by the fourth information, whether to continue to request the radio frequency unit to configure a resource, which may further support improvement of utilization of the resource of the radio frequency unit.

In addition, an occasion for sending the fourth information by the radio frequency unit to the first distributed unit and/or the second distributed unit is not limited in embodiments of this application. For example, the radio frequency unit may send the fourth information to the first distributed unit and/or the second distributed unit before the first distributed unit and/or the second distributed unit send/sends information for requesting a resource, or the radio frequency unit may send the fourth information to the first distributed unit and/or the second distributed unit after the first distributed unit and/or the second distributed unit successfully request/requests a resource.

In embodiments of this application, an exchange process in which resource configuration can be performed between the radio frequency unit and the distributed unit is established, so that the radio frequency unit can flexibly and efficiently configure a resource of the radio frequency unit. In this way, utilization of the resource of the radio frequency unit can be improved.

In the foregoing descriptions, the first resource may be a resource at a granularity of the distributed unit. For example, the distributed unit needs to maintain a plurality of carriers, and the distributed unit may request a total resource from the radio frequency unit. After request succeeds, the distributed unit may share the resource with another distributed unit.

In the foregoing descriptions, the first resource may alternatively be a carrier-granularity resource. For example, the first distributed unit needs to maintain a plurality of carriers, and the first distributed unit may request a resource from the radio frequency unit for each carrier at the granularity of the carrier. After the first distributed unit successfully requests a resource, the first distributed unit does not need to configure a resource for each carrier. This can effectively reduce resource configuration overheads of the first distributed unit.

It should be noted that the information term in the methods shown in FIG. 2 to FIG. 5 is merely used as an example, and may be replaced with another term. This is not limited.

In a possible implementation, the first information may be carried in network configuration protocol (network configuration protocol, NETCONF) edit-config remote procedure call (remote procedure call, PRC) information, or the first information may be NETCONF edit-config RPC. This is not limited. NETCONF provides a set of protocols for communication between a network management device and a network device. The network management device delivers, modifies, and deletes a configuration on a remote device based on the NETCONF. RPC is used to implement communication between a client and a server.

In another possible implementation, the fourth information may be carried in NETCONF supervision-notification (supervision-notification) PRC, or the fourth information may be NETCONF supervision-notification PRC. This is not limited.

It should be noted that the methods shown in FIG. 2 to FIG. 5 are described by using an example in which an exchange process of resource configuration is performed between the radio frequency unit and the first distributed unit. Names of terms and the like in the foregoing content are used as examples, and are not used as final limitations.

Finally, apparatus embodiments in embodiments of this application are described.

To implement functions in the methods provided in this application, each of a first device and a second device may include a hardware structure and/or a software module, to implement the foregoing functions in a form of the hardware structure, the software module, or a combination of the hardware structure and the software module. Whether a function in the foregoing functions is performed by using the hardware structure, the software module, or the combination of the hardware structure and the software module depends on particular applications and design constraints of the technical solutions.

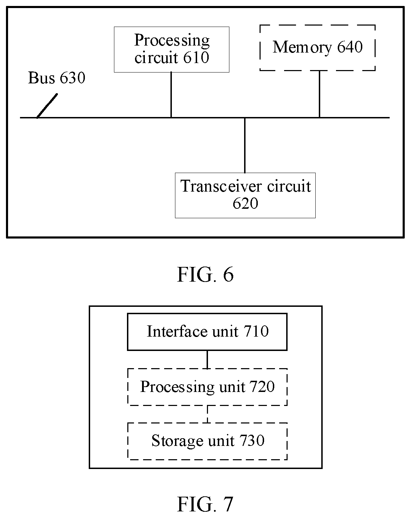

FIG. 6 is a block diagram of a communication apparatus according to an embodiment of this application. The communication apparatus includes a processor 610 and a communication interface 620. The processor 610 and the communication interface 620 may be connected to each other through a bus 630. The communication apparatus may be a radio frequency unit or a first distributed unit.

Optionally, the communication apparatus may further include a memory 640. The memory 640 includes but is not limited to a random access memory (random access memory, RAM), a read-only memory (read-only memory, ROM), an erasable programmable read-only memory (erasable programmable read-only memory, EPROM), or a compact disc read-only memory (compact disc read-only memory, CD-ROM). The memory 640 is used for related instructions and data.

The processor 610 may be one or more central processing units (central processing unit, CPU). When the processor 610 is one CPU, the CPU may be a single-core CPU or a multi-core CPU.

When the communication apparatus is a first distributed unit, for example, the processor 610 is configured to perform the following operations: sending first information, receiving second information, and the like.

When the communication apparatus is a radio frequency unit, for example, the processor 610 is configured to perform the following operations: receiving first information, sending second information, and the like.

The foregoing content is merely used as an example for description. The communication apparatus is the radio frequency unit or the first distributed unit, and is responsible for performing methods or steps related to the radio frequency unit or the first distributed unit in the foregoing method embodiments.

The foregoing descriptions are merely examples. For specific content, refer to the content shown in the method embodiments. For implementation of each operation in FIG. 6, refer to corresponding descriptions of the method embodiments shown in FIG. 2 to FIG. 5.

FIG. 7 is a block diagram of another communication apparatus according to an embodiment of this application. The communication apparatus may be a first distributed unit or a radio frequency unit, or may be a chip or a module in the first distributed unit or the radio frequency unit, and is configured to implement the methods in the foregoing embodiments.

The communication apparatus includes an interface unit 710. The interface unit 710 may include a sending unit and a receiving unit. The sending unit is configured to execute a sending action of the communication apparatus, and the receiving unit is configured to execute a receiving action of the communication apparatus. For ease of description, in embodiments of this application, the sending unit and the receiving unit are combined into one interface unit. Unified descriptions are provided herein, and details are not described again below.

When the communication apparatus is a first distributed unit, for example, the interface unit 710 is configured to send first information and receive second information.

Optionally, the communication apparatus may further include a processing unit 720, which is configured to perform content related to steps such as processing and coordination performed by the first distributed unit. For example, the processing unit 720 is configured to use a first resource.

When the communication apparatus is a radio frequency unit, for example, the interface unit 710 is configured to receive the first information and send second information.

Optionally, the communication apparatus may further include a processing unit 720, which is configured to perform content related to steps such as processing and coordination performed by the radio frequency unit. For example, the processing unit 720 is configured to determine whether to configure the first resource.

The foregoing content is merely used as an example for description. The communication apparatus is the first distributed unit or the radio frequency unit, and is responsible for performing methods or steps related to the first distributed unit or the radio frequency unit in the foregoing method embodiments.

Optionally, the communication apparatus further includes a storage unit 730. The storage unit 730 is configured to store a program or code used for performing the foregoing methods.

The apparatus embodiments shown in FIG. 6 and FIG. 7 are used for implementing the content described in FIG. 2 to FIG. 5. For specific execution steps and methods of the apparatuses shown in FIG. 6 and FIG. 7, refer to the content described in the foregoing method embodiments.

The foregoing descriptions of the communication apparatus are merely an example for description. The communication apparatus can be configured to perform the methods in the foregoing embodiments. For specific content, refer to the descriptions of the foregoing method embodiments. Details are not described herein again.

This application further provides a chip, including a processor, configured to invoke instructions from a memory and run the instructions stored in the memory, to cause a communication device on which the chip is installed to perform the method in the foregoing examples.

This application further provides another chip, including an input interface, an output interface, and a processor. The input interface, the output interface, and the processor are connected to each other through an internal connection path. The processor is configured to execute code in a memory. When the code is executed, the processor is configured to perform the method in the foregoing examples. Optionally, the chip further includes the memory. The memory is configured to store a computer program or code.

This application further provides a processor, configured to be coupled to a memory, and configured to perform a method and a function of the network device or the terminal device in any one of the foregoing embodiments.

Another embodiment of this application provides a computer program product including instructions. When the computer program product runs on a computer, the method in the foregoing embodiment is implemented.

This application further provides a computer program. When the computer program is run on a computer, the method in the foregoing embodiment is implemented.

Another embodiment of this application provides a computer-readable storage medium. The computer-readable storage medium stores a computer program. When the computer program is executed by a computer, the method in the foregoing embodiment is implemented.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In several embodiments provided in this application, the disclosed system, apparatuses, and method may be implemented in another manner. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, in other words, may be located in one position, or may be distributed on a plurality of network units. Some or all of the units may be selected based on actual requirements to achieve the objectives of the solutions of embodiments.

In addition, functional units in embodiments of this application may be integrated into one processing unit, or each unit may exist alone physically, or two or more units may be integrated into one unit.

When functions are implemented in the form of a software functional unit and sold or used as an independent product, the functions may be stored in a computer-readable storage medium. Based on such an understanding, the technical solutions of embodiments of this application essentially, or the part contributing to the conventional technologies, or some of the technical solutions may be implemented in a form of a software product. The computer software product is stored in a storage medium, and includes several instructions for instructing a computer device (which may be a personal computer, a server, or a network device) to perform all or some of the steps of the methods described in embodiments of this application. The foregoing storage medium includes any medium that can store program code, such as a USB flash drive, a removable hard disk, a ROM, a RAM, a magnetic disk, or an optical disc.

The foregoing descriptions are merely specific implementations in embodiments of this application, but are not intended to limit the protection scope of embodiments of this application. Any variation or replacement readily figured out by a person skilled in the art within the technical scope disclosed in embodiments of this application shall fall within the protection scope in embodiments of this application. Therefore, the protection scope of embodiments of this application should be subject to the protection scope of the claims.

## Claims

1. A communication method, wherein the method is performed by a radio frequency unit, and the method comprises:
receiving first information from a first distributed unit, wherein the first information requests a first resource; and
sending second information to the first distributed unit in response to the first information, wherein the second information is determined based on resource allocation in a resource set of the radio frequency unit and the first resource, the resource set is usable by the radio frequency unit to serve at least two distributed units, and the at least two distributed units comprise the first distributed unit.

2. The method according to claim 1, wherein the first information indicates that an attribute of the first resource is a basic resource or an additional resource, the basic resource is a resource used to provide a service within coverage of a cell, and the additional resource is a resource used to improve user experience.

3. The method according to claim 2, wherein the second information being determined based on the resource allocation in the resource set of the radio frequency unit and the first resource comprises:
the second information is determined based on the attribute of the first resource, the first resource, and the resource allocation in the resource set.

4. The method according to claim 3, wherein the second information being determined based on the attribute of the first resource, the first resource, and the resource allocation in the resource set comprises:
the second information is determined based on the attribute of the first resource, the first resource, and an unallocated resource in the resource set.

5. The method according to claim 3, wherein the second information being determined based on the attribute of the first resource, the first resource, and the resource allocation in the resource set comprises:
the second information is determined based on the attribute of the first resource, the first resource, an unallocated resource in the resource set, and an allocated additional resource in the resource set.

6. The method according to claim 5, wherein
the first information indicates that the attribute of the first resource is the basic resource, the first resource is greater than the unallocated resource in the resource set, a sum of the unallocated resource in the resource set and the allocated additional resource in the resource set is greater than or equal to the first resource, and the second information is used to configure the first resource; and
the allocated additional resource in the resource set is used to serve a second distributed unit, and the at least two distributed units further comprise the second distributed unit.

7. The method according to claim 6, wherein the method further comprises:
sending third information to the second distributed unit, wherein the third information indicates that the allocated additional resource in the resource set that corresponds to the second distributed unit has changed.

8. The method according to any one of claims 1 to 7, wherein the method further comprises:
sending fourth information, wherein the fourth information indicates the resource allocation in the resource set.

9. The method according to any one of claims 1 to 8, wherein the first resource comprises at least one of the following:
a power resource, a transmission resource, or a bandwidth resource.

10. The method according to any one of claims 1 to 9, wherein the first resource is a carrier-granularity resource.

11. A communication method, wherein the method is performed by a first distributed unit, and the method comprises:
sending first information to a radio frequency unit, wherein the first information requests a first resource; and
receiving second information from the radio frequency unit, wherein the second information is determined based on resource allocation in a resource set of the radio frequency unit and the first resource, the resource set is usable by the radio frequency unit to serve at least two distributed units, the at least two distributed units comprise the first distributed unit, and the second information is a response to the first information.

12. The method according to claim 11, wherein the first information further indicates that an attribute of the first resource is a basic resource or an additional resource, the basic resource is a resource used to provide a service within coverage of a cell, and the additional resource is a resource used to improve user experience.

13. The method according to claim 12, wherein the second information being determined based on the resource allocation in the resource set of the radio frequency unit and the first resource comprises:
the second information is determined based on the attribute of the first resource, the first resource, and the resource allocation in the resource set.

14. The method according to claim 13, wherein the second information being determined based on the attribute of the first resource, the first resource, and the resource allocation in the resource set comprises:
the second information is determined based on the attribute of the first resource, the first resource, and an unallocated resource in the resource set.

15. The method according to claim 13, wherein the second information being determined based on the attribute of the first resource, the first resource, and the resource set comprises:
the second information is determined based on the attribute of the first resource, the first resource, an unallocated resource in the resource set, and an allocated additional resource in the resource set.

16. The method according to claim 15, wherein
the first information indicates that the attribute of the first resource is the basic resource, the first resource is greater than the unallocated resource in the resource set, a sum of the unallocated resource in the resource set and the allocated additional resource in the resource set is greater than or equal to the first resource, and the second information is used to configure the first resource; and
the allocated additional resource in the resource set is used to serve a second distributed unit, and the at least two distributed units further comprise the second distributed unit.

17. The method according to any one of claims 11 to 16, wherein the method further comprises:
receiving fourth information from the radio frequency unit, wherein the fourth information indicates the resource allocation in the resource set.

18. The method according to any one of claims 11 to 17, wherein the first resource comprises at least one of the following:
a power resource, a transmission resource, or a bandwidth resource.

19. The method according to any one of claims 11 to 18, wherein the first resource is a carrier-granularity resource.

20. A communication method, comprising:
sending, by a first distributed unit, first information to a radio frequency unit, wherein the first information requests a first resource; and
sending, by the radio frequency unit, second information to the first distributed unit, wherein the second information is determined based on resource allocation in a resource set of the radio frequency unit and the first resource, the resource set is usable by the radio frequency unit to serve at least two distributed units, and the at least two distributed units comprise the first distributed unit.

21. A communication system, comprising a first distributed unit and a radio frequency unit, wherein
the radio frequency unit is configured to perform the method according to any one of claims 1 to 10, and
the first distributed unit is configured to perform the method according to any one of claims 11 to 19.

22. A communication apparatus, comprising a unit configured to perform the method according to any one of claims 1 to 10, or comprising a unit configured to perform the method according to any one of claims 11 to 19.

23. A computer-readable storage medium, wherein the computer-readable storage medium stores a computer program or instructions; and when the computer program or the instructions are executed by a computer,
the method according to any one of claims 1 to 10 is performed; or
the method according to any one of claims 11 to 19 is performed.

24. A computer program product, comprising instructions, wherein when the instructions are executed by a computer,
the method according to any one of claims 1 to 10 is performed; or
the method according to any one of claims 11 to 19 is performed.

25. A chip system, wherein the chip system comprises a processor, a memory, and an input/output port, the memory is configured to store a computer program, and the processor is configured to execute the computer program stored in the memory,
to cause the processor to perform the method according to any one of claims 1 to 10; or
to cause the processor to perform the method according to any one of claims 11 to 19.

26. A communication apparatus, comprising:
an interface unit, configured to:
receive first information from a first distributed unit, wherein the first information requests a first resource; and
send second information to the first distributed unit in response to the first information, wherein the second information is determined based on resource allocation in a resource set of the communication apparatus and the first resource, the resource set is usable by the communication apparatus to serve at least two distributed units, and the at least two distributed units comprise the first distributed unit.

27. The apparatus according to claim 26, wherein the first information indicates that an attribute of the first resource is a basic resource or an additional resource, the basic resource is a resource used to provide a service within coverage of a cell, and the additional resource is a resource used to improve user experience.

28. The apparatus according to claim 27, wherein the second information being determined based on the resource allocation in the resource set of the communication apparatus and the first resource comprises:
the second information is determined based on the attribute of the first resource, the first resource, and the resource allocation in the resource set.

29. The apparatus according to claim 28, wherein the second information being determined based on the attribute of the first resource, the first resource, and the resource allocation in the resource set comprises:
the second information is determined based on the attribute of the first resource, the first resource, and an unallocated resource in the resource set.

30. The apparatus according to claim 28, wherein the second information being determined based on the attribute of the first resource, the first resource, and the resource allocation in the resource set comprises:
the second information is determined based on the attribute of the first resource, the first resource, an unallocated resource in the resource set, and an allocated additional resource in the resource set.

31. The apparatus according to claim 30, wherein the first information indicates that the attribute of the first resource is the basic resource, the first resource is greater than the unallocated resource in the resource set, a sum of the unallocated resource in the resource set and the allocated additional resource in the resource set is greater than or equal to the first resource, and the second information is used to configure the first resource; and the allocated additional resource in the resource set is used to serve a second distributed unit, and the at least two distributed units further comprise the second distributed unit.

32. The apparatus according to claim 31, wherein the interface unit is further configured to send third information to the second distributed unit, and the third information indicates that the allocated additional resource in the resource set that corresponds to the second distributed unit has changed.

33. The apparatus according to any one of claims 26 to 32, wherein the interface unit is further configured to send fourth information, and the fourth information indicates the resource allocation in the resource set.

34. The apparatus according to any one of claims 26 to 33, wherein the first resource comprises at least one of the following:
a power resource, a transmission resource, or a bandwidth resource.

35. The apparatus according to any one of claims 26 to 34, wherein the first resource is a carrier-granularity resource.

36. A communication apparatus, comprising:
an interface unit, configured to:
send first information to a radio frequency unit, wherein the first information requests a first resource; and
receive second information from the radio frequency unit, wherein the second information is determined based on resource allocation in a resource set of the radio frequency unit and the first resource, the resource set is usable by the radio frequency unit to serve at least two distributed units, the at least two distributed units comprise the communication apparatus, and the second information is a response to the first information.

37. The apparatus according to claim 36, wherein the first information further indicates that an attribute of the first resource is a basic resource or an additional resource, the basic resource is a resource used to provide a service within coverage of a cell, and the additional resource is a resource used to improve user experience.

38. The apparatus according to claim 37, wherein the second information being determined based on the resource allocation in the resource set of the radio frequency unit and the first resource comprises:
the second information is determined based on the attribute of the first resource, the first resource, and the resource allocation in the resource set.

39. The apparatus according to claim 38, wherein the second information being determined based on the attribute of the first resource, the first resource, and the resource allocation in the resource set comprises:
the second information is determined based on the attribute of the first resource, the first resource, and an unallocated resource in the resource set.

40. The apparatus according to claim 38, wherein the second information being determined based on the attribute of the first resource, the first resource, and the resource allocation in the resource set comprises:
the second information is determined based on the attribute of the first resource, the first resource, an unallocated resource in the resource set, and an allocated additional resource in the resource set.

41. The apparatus according to claim 40, wherein the first information indicates that the attribute of the first resource is the basic resource, the first resource is greater than the unallocated resource in the resource set, a sum of the unallocated resource in the resource set and the allocated additional resource in the resource set is greater than or equal to the first resource, and the second information is used to configure the first resource; and the allocated additional resource in the resource set is used to serve a second distributed unit, and the at least two distributed units further comprise the second distributed unit.

42. The apparatus according to any one of claims 36 to 41, wherein the interface unit is further configured to receive fourth information from the radio frequency unit, and the fourth information indicates the resource allocation in the resource set.

43. The apparatus according to any one of claims 36 to 42, wherein the first resource comprises at least one of the following:
a power resource, a transmission resource, or a bandwidth resource.

44. The apparatus according to any one of claims 36 to 43, wherein the first resource is a carrier-granularity resource.
